# FASCICULE DE BREVET EUROPEEN

(11) **EP 2 942 676 B1**
(45) Date de publication et mention de la délivrance du brevet: **29.07.2020**
(21) Numéro de dépôt: 15160409.7
(22) Date de dépôt: 23.03.2015
(51) Int. Cl.: G05B 15/02, G05B 19/042

(54) **PROCÉDÉ D'OPTIMISATION DE L'ÉNERGIE FOURNIE À UNE PLURALITÉ D'ÉQUIPEMENTS RÉPARTIS DANS UN ESPACE**
VERFAHREN ZUR OPTIMIERUNG DER AN EINE VIELZAHL VON IN EINEM RAUM VERTEILTEN GERÄTEN GELIEFERTEN ENERGIE
METHOD FOR OPTIMISING THE ENERGY SUPPLIED TO A PLURALITY OF DEVICES DISTRIBUTED IN A SPACE

(30) Priorité: 26.03.2014 FR 1452583
(43) Date de publication de la demande: 11.11.2015
(73) Titulaire: Schneider Electric Industries SAS, 92500 Rueil-Malmaison (FR)
(72) Inventeur: Leger, Eric, 38050 Grenoble Cedex 9 (FR); Boutin, Véronique, 38050 Grenoble Cedex 9 (FR)
(74) Mandataire: Brevalex

(56) Documents cités:
- JP-A- 2006 090 668
- US-A1- 2013 035 799
- US-A1- 2013 226 320

## Description

### DOMAINE TECHNIQUE

L'invention se situe dans le domaine de la fourniture d'énergie et concerne plus spécifiquement un procédé d'optimisation de l'énergie totale fournie à une pluralité d'équipements de confort répartis dans un espace comportant un module central de gestion de l'énergie à fournir et une pluralité de zones Zi, chaque zone Zi comportant au moins un poste de travail susceptible d'accueillir au moins une personne.

L'invention concerne également un dispositif et un programme d'ordinateur mémorisé sur un support destinés à mettre en œuvre le procédé.

### ÉTAT DE LA TECHNIQUE ANTÉRIEURE

Les techniques connues pour gérer l'énergie à fournir à des équipements de confort répartis dans un espace sont mises en œuvre par des gestionnaires énergétiques des bâtiments qui déterminent des valeurs de consignes de commande de l'énergie globale à fournir dans tout l'espace en fonction du volume de cet espace, des saisons, de normes, de réglementations ou encore d'habitudes. Un exemple de l'état de la technique antérieur est connu du document US 2013/226320 A1.

Ces techniques ne permettent pas de réaliser une gestion « multi niveaux » des équipements de confort (thermique, visuel) afin d'atteindre une valeur optimale d'énergie globale à fournir à une zone globale et de ne consommer que le strict nécessaire au niveau de zones locales constituées de subdivisions de la zone globale.

Un but de l'invention est d'optimiser l'énergie totale à fournir en répartissant l'énergie fournie de façon sélective dans les des zones considérées, tout en assurant un confort optimal aux occupants de l'espace.

### EXPOSÉ DE L'INVENTION

L'invention est définie par les revendications indépendantes 1, 7 et 8. Des formes préférées sont définies dans les revendications dépendantes 1 à 6.

Le but de l'invention est atteint au moyen d'un procédé d'optimisation de l'énergie totale fournie à une pluralité d'équipements de confort répartis dans un espace comportant un module central de gestion de l'énergie à fournir et une pluralité de zones Zi, chaque zone Zi comportant au moins un poste de travail PA susceptible d'accueillir au moins une personne, chaque équipement de confort local étant associé à au moins un actionneur local et à au moins un moyen d'évaluation temps réel de l'énergie consommée par l'équipement de confort local.

Le procédé selon l'invention comporte les étapes suivantes:
- déterminer le taux d'occupation des zones Zi,
- recueillir en temps réel des informations relatives à l'utilisation de chaque équipement de confort dans chaque poste de travail et des données représentatives du niveau d'insatisfaction des personnes présentes sur chaque poste de travail des zones Zi;
- évaluer à partir desdites données un taux d'insatisfaction global des personnes présentes dans chaque zone Zi,
- comparer le taux d'insatisfaction global à un seuil prédéfini,
- Si le taux d'insatisfaction est inférieur au seuil prédéfini, calculer de façon itérative une consigne globale pour réduire l'énergie globale à fournir, et,
   - réévaluer le taux d'insatisfaction résultant pour chaque nouvelle valeur de la consigne Cg,
   - appliquer la consigne globale Cg calculée à l'un au moins des équipements de confort pour minimiser l'énergie totale fournie,
- Si le taux d'insatisfaction est supérieur au seuil prédéfini, varier de façon itérative la consigne globale jusqu'à ce que le taux d'insatisfaction global résultant devienne inférieur au seuil prédéfini,
   - appliquer la consigne globale Cg au module central de gestion de l'énergie totale pour adapter l'énergie totale à fournir.

Les informations relatives à l'utilisation de chaque équipement de confort dans chaque poste de travail concernent le niveau d'utilisation de chaque équipement. Il peut s'agir par exemple du niveau d'utilisation d'un ventilateur ou d'une lampe sur un poste de travail donné. La lumière peut par exemple être allumée à 60 % et le ventilateur à 20%.

Il est à noter que dans le cas où le taux d'insatisfaction est inférieur à un niveau maximum prédéfini, le calcul de la consigne globale se fait de façon itérative en faisant varier celle-ci de manière à réduire l'énergie totale fournie. Pour chaque nouvelle valeur de la consigne, on calcule le taux d'insatisfaction résultant en considérant que les équipements locaux assureront, le besoin de confort de l'occupant.

Dans le cas où le taux d'insatisfaction est supérieur au niveau maximum prédéfini, le calcul de la consigne globale se fait de façon itérative en faisant varier celle-ci de manière à réduire le niveau d'insatisfaction. Pour chaque nouvelle valeur de consigne, on calcule le taux d'insatisfaction résultant. Dès que celui-ci devient inférieur niveau maximum prédéfini la consigne globale calculée est adoptée.

Le procédé selon l'invention exploite en temps réel des informations provenant de chaque poste de travail telles que par exemple des informations de présence, des informations sur le confort perçu par chaque occupant, du contexte environnemental de chaque occupant. Les postes de travail sont par exemple des bureaux agencés dans un espace de travail et gérés par un système de contrôle spécifique de type PAM (Personal Area Management).

Le procédé prend également en compte la performance intrinsèque de, l'ensemble des équipements installés dans une zone, versus celle des équipements locaux. Grâce à cette gestion plus fine au niveau de l'occupant, il est possible de piloter plus finement la consommation énergétique, d'un bâtiment par exemple, liée au confort global (open space, bureau privatif...) et éviter toute consommation d'énergie inutile. De plus, la connaissance du taux d'occupation du bâtiment permet d'ajuster les consignes des équipements de confort globaux en conséquence.

Le procédé selon l'invention comporte en outre une étape consistant à adapter la consigne globale Cg en fonction des données représentatives du niveau d'insatisfaction des personnes présentes dans chaque zone Zi, de sorte que chaque équipement local soit en mesure de dispenser l'énergie nécessaire pour assurer le confort requis par chaque occupant.

Le procédé comporte en outre une étape consistant à couper la fourniture d'énergie aux équipements de confort situés dans les postes de travail non occupées.

Le procédé selon l'invention permet de conditionner de façon sélective un volume réduit de l'espace en exploitant la connaissance en temps réel du besoin de chaque poste de travail, des performances et du potentiel de chaque équipement local, ainsi que des performances et du potentiel de l'ensemble des équipements installés dans une zone.

Selon une autre caractéristique de l'invention, les données représentatives du niveau d'insatisfaction des personnes présentes dans chaque zone personnelle (PA, pour Personal Area) comportent des grandeurs physiques représentant les conditions environnementales locales mesurées dans chaque poste de travail par les capteurs et des grandeurs subjectives relatives au métabolisme et à la vêture de chaque personne présente dans chaque poste de travail. Lesdites grandeurs physiques comportent la température ambiante, la température radiative, l'humidité, et la luminosité, et lesdites grandeurs subjectives comportent des valeurs normalisées fournies par chaque personne présente dans chaque poste de travail via une interface Homme-Machine et représentant la perception de chaque personne de la température ambiante, la température radiative, l'humidité, la vitesse d'air et la luminosité dans chaque poste de travail.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles:
- la figure 1 illustre schématiquement un immeuble comprenant plusieurs espaces dans lesquels est mis en œuvre le procédé selon l'invention,
- la figure 2 représente schématiquement des postes de travail dans la zone de la figure 3,
- la figure 3 illustre schématiquement une zone d'un espace de la figure 1,
- la figure 4 représente un schéma bloc illustrant les fonctions utilisées dans le procédé selon l'invention,
- la figure 5 est un organigramme illustrant les étapes du procédé selon l'invention.

### EXPOSÉ DÉTAILLÉ DE MODES DE RÉALISATION PARTICULIERS

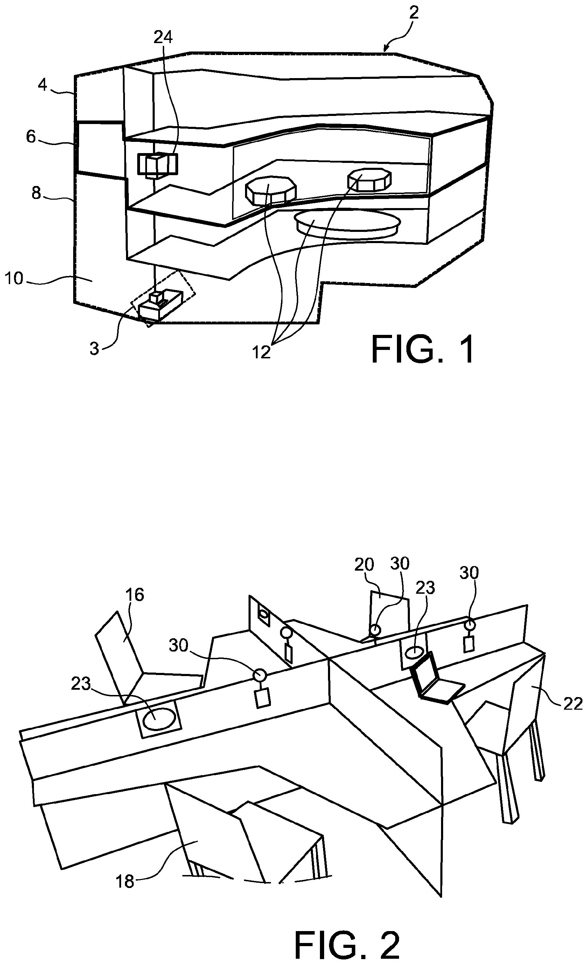

L'invention sera décrite en référence à la figure 1 illustrant schématiquement un immeuble 2 comportant plusieurs espaces 4, 6, 8 et 10 comportant chacun plusieurs zones Zi 12 dans chacune desquelles sont agencés plusieurs postes de travail 16, 18, 20 et 22. Chaque espace 4, 6, 8 et 10 est équipé d'un contrôleur de zone 24 destiné à superviser la consommation globale d'énergie dans la zone considéré. Chaque poste de travail comporte un contrôleur local 30 destiné à superviser la consommation locale d'énergie dans chaque poste de travail par au moins un équipement de confort local, tel que par exemple un appareil de chauffage et/ou de ventilation et une lampe d'éclairage. Le contrôleur de zone 24 communique, d'une part, avec un module central de gestion d'énergie 3, et d'autre part, avec chaque contrôleur local 30 au moyen d'une liaison filaire ou au moyen d'une liaison sans fil tel que le WiFi par exemple.

Dans la suite de la description, on désignera par « équipement de confort global » un équipement destiné à contrôler l'ensemble des équipements, d'éclairage ou de chauffage installés dans une zone donnée.

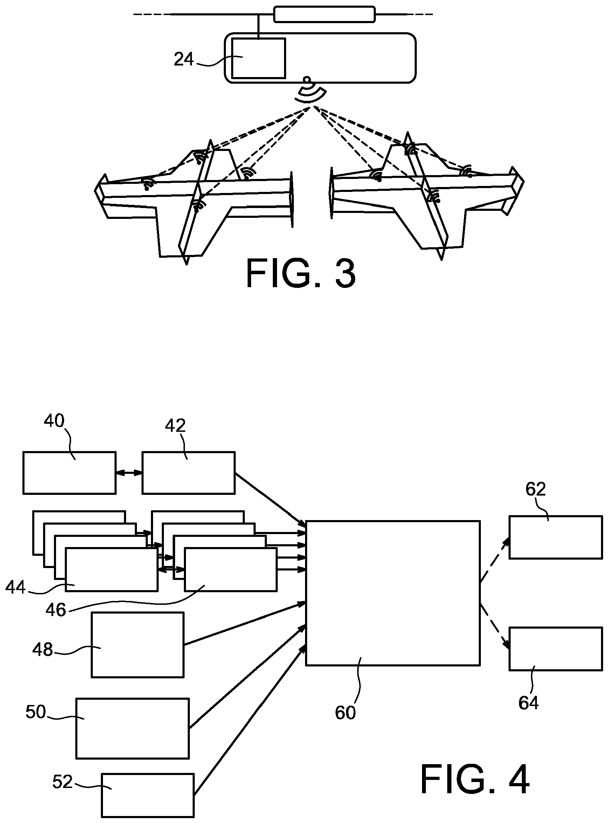

La figure 3 illustre un exemple d'utilisation du dispositif selon l'invention dans un espace de travail ouvert (open-space, en anglais). Le contrôleur de zone 24 reçoit en temps réel la puissance consommée par chaque équipement de confort global (HVAC, éclairage général), et supervise les équipements de confort globaux de cet open-space. A cet effet, le contrôleur local 30 de chaque bureau communique au contrôleur de zone 24 les données propres à chaque poste de travail, notamment :
- La présence ou non d'un occupant au poste de travail,
- Le besoin de confort de chaque occupant au poste de travail. Ces besoins peuvent être formalisés comme suit : « je souhaite plus de froid », « je souhaite plus de lumière », ...)
- Le niveau de consommation des équipements de confort local, c'est-à-dire la puissance consommée par les équipements d'appoint (lampe, ventilateur, chauffage) ou le niveau de commande qui leurs sont appliqués,

Le contrôleur de zone 24 comporte un module programmable comportant un algorithme adapté pour analyser les informations reçues et pour calculer une consigne globale optimale. Notons que cette consigne globale peut être également calculée par le module central de gestion d'énergie 3 sans sortir du cadre de l'invention.

Le principe d'ajustement du contrôle des équipements globaux en fonction de l'utilisation effective des équipements locaux est décrit ci-après dans un exemple de contrôle de rafraichissement (confort d'été) d'un bâtiment comprenant n zones contrôlables (ex: n open space) appelées dans ce qui suit Zi (i variant de 1 à n). Le même principe s'applique au contrôle de chauffage (ou de l'éclairage).

Chaque zone comporte m(Zi) contrôleur locaux 30 appelés dans cet exemple PAM(Zi, j) (j variant de 1 à m(Zi)). Un équipement global gère la production thermique globale de froid et fournit une puissance instantanée de froid Pf(t). L'objectif est de minimiser (Pf(t)+Energie de refroidissement 'ventilateur' des PAM(Zi, j)) en s'assurant que la satisfaction thermique globale des occupants est conforme à l'attente. Une approche statistique est mise en place sur ce point particulier, c'est-à-dire que le nombre de personnes insatisfaites au niveau du bâtiment ne devra pas dépasser un taux prédéfini x%. Ce taux d'insatisfaction global pour chaque zone Zi est calculé à un intervalle de temps régulier prédéfini en utilisant les données provenant de chaque PAM. La satisfaction de l'occupant sur chaque zone est évaluée à partir des équations du confort perçu, en prenant en compte les données d'environnement provenant des capteurs locaux, et en utilisant les paramètres d'adaptation à chaque personne issus de l'interprétation d'informations fournies par chaque occupant via une IHM locale: « je souhaite plus de froid », « je souhaite plus de lumière », ...). L'occupation effective de chaque zone est fournie par un capteur de présence.

Si le taux d'insatisfaction global est inférieur ou égal à x%, l'algorithme recherche s'il y a un potentiel de réduction de (Pf(t)+Energies PAM(Zi,j)), c'est-à-dire si l'ensemble des occupants présents (à x% près) a un potentiel d'augmentation du niveau de la ventilation personnelle suffisant pour compenser une augmentation de la température globale en gardant une qualité de confort perçu identique. La recherche du potentiel maximum est itérative en procédant par paliers successifs de diminution de la consigne de confort global, c'est-à-dire, en augmentant la température de façon incrémentale dans le cas du confort d'été. La nouvelle consigne de température globale résultante pour une zone considérée est alors envoyée au système de commande de l'équipement de refroidissement global.

Si le taux d'insatisfaction global est supérieur à x%, l'algorithme analyse la situation pour déterminer si une meilleure consigne globale peut être appliquée, et le cas échéant laquelle. Pour chaque zone occupée, on compare le niveau d'insatisfaction exprimé avec le potentiel de réglage local disponible. S'il existe un potentiel de commande de ventilateur permettant, à priori, d'atteindre le niveau de confort souhaité, l'insatisfaction de l'occupant de la zone considérée n'est pas prise en compte. La distribution des insatisfactions n'ayant pas de solution locale est ainsi réévaluée. Une modification de consigne globale est alors recalculée de façon à minimiser l'insatisfaction globale (qui peut cependant rester supérieure à x%) à moindre coût énergétique.

La figure 4 illustre les fonctions et les informations utilisées dans l'algorithme de calcul pour minimiser (Pf(t)+ Energies PAM) en s'assurant que la satisfaction thermique globale des occupants est conforme à l'attente.

Le rendement global 40, au niveau de l'équipement énergétique global d'une zone est évalué en fonction de la consommation actuelle 42 des équipements globaux, c'est-à-dire, par l'ensemble des équipements de cette zone tels que par exemple les luminaires ou les climatiseurs installés dans cette zone. Le résultat est transmis au contrôleur de zone.

Le rendement de chaque équipement local 44 (radiateur, lampe, ventilateur...) est évalué en fonction de la consommation locale de cet équipement 46 et le résultat est transmis à chaque contrôleur local 30 qui gère un groupe de bureaux.

Les capteurs de présences des différentes zones fournissent au contrôleur local 30 le nombre de personnes 48 présentes à leurs postes de travail respectifs.

Chaque occupant fournit ses besoins 50 de confort au module programmable via l'IHM.

Les paramètres physiques 52 mesurés dans chaque zone par les capteurs, au niveau de chaque poste de travail, sont fournis au contrôleur local 30.

A partir des informations des différents capteurs et de chaque occupant reçues par les contrôleurs locaux 30, le contrôleur de zone 24 détermine 60 un scénario pour une consommation optimale de l'énergie totale tout en respectant les besoins de chaque occupant.

Selon un premier scénario, l'algorithme commande l'équipement global qui supervise la zone considérée en fonction du nombre d'occupants, les besoins des occupants, le rendement des équipements globaux et locaux et leur consommation instantanée. Selon un deuxième scénario, l'algorithme commande les équipements locaux. Selon un troisième scénario, l'algorithme laisse chaque occupant agir sur les équipements de son poste de travail.

Si le premier scénario est choisi, une consigne globale est transmise (étape 62) à l'actionneur global pour optimiser l'énergie totale consommée.

Si le deuxième scénario est choisi, une consigne locale est transmise (étape 64) à chaque actionneur local pour optimiser l'énergie consommée localement.

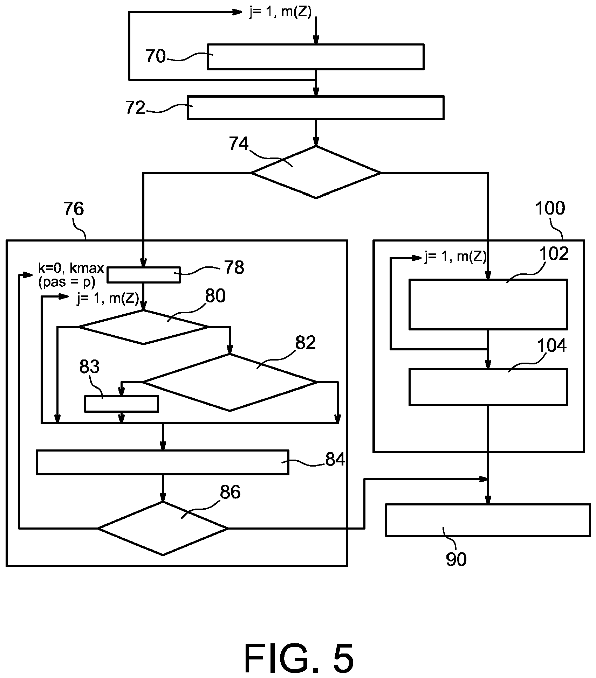

Le processus d'optimisation est décrit par la figure 5 pour chaque zone Zi comportant un nombre m(Zi) d'actionneurs locaux appelés PAM(Zi, j) (j variant de 1 à m(Zi)).

Pour j variant de 1 à m(Z), l'étape 70 consiste à vérifier la présence d'un occupant dans la zone considérée et d'analyser l'information relative à la satisfaction de cet occupant.

L'étape 72 consiste à évaluer le taux d'insatisfaction des personnes présentes dans la zone considérée. Le taux d'insatisfaction global pour chaque zone Zi est calculé en utilisant les données provenant de chaque PAM.

L'étape 74 consiste à comparer le taux d'insatisfaction évalué à l'étape précédente à un taux x% prédéfini.

Si le taux d'insatisfaction évalué est inférieur à x%, l'algorithme calcule une consigne globale Cg minimisant l'énergie globale à fournir. Le calcul de Cg est réalisée en multipliant la valeur de l'énergie globale à fournir par un coefficient de réduction k variant entre 0 et une valeur maximale kmax, et en incrémentant ce coefficient k avec un pas p entier en fonction des résultats fournis par chaque PAM(j).

A partir d'une valeur donnée du coefficient k=0 (l'étape 78), pour chaque zone Zi et pour j variant de 1 à m(z), l'algorithme analyse (étape 78) les informations d'occupation et de satisfaction transmise par le PAM(j). Si la zone Zi est occupée et si l'occupant de cette zone est satisfait, l'algorithme vérifie (l'étape 82) si le potentiel de commande local permet à l'occupant de la zone d'être à iso-confort avec la consigne globale actuelle C_{g-k}.

Si oui, le nombre de personnes insatisfaites est inchangé.

Sinon, le nombre de personnes insatisfaite est incrémenté à l'étape 83 (nombre d'insatisfaits = nombre d'insatisfaits + 1).

A l'étape 84, le taux d'insatisfaction des personnes présentes dans la zone considérée est réévalué.

L'étape 86 consiste à vérifier si le taux évalué à l'étape 84 est descendu en dessous du taux x%.

Si oui, le coefficient k est incrémenté et le processus du calcul de la consigne globale Cg minimisant l'énergie globale reprend à partir de l'étape 80 jusqu'à l'étape 86.

Si le taux réévalué à l'étape 84 est supérieur au taux x%, une nouvelle consigne Cg est transmise (étape 90) à l'équipement global.

Si par contre le taux d'insatisfaction évalué à l'étape 74 est supérieur au taux x%, l'algorithme calcule, pour j allant de 1 à m(z), une consigne globale Cg minimisant l'insatisfaction des personnes présentes dans la zone considérée. Ce processus comporte une étape 102 consistant à analyser la distribution des valeurs de confort perçu transmises par chaque PAM pour les zones occupées et à calculer un niveau moyen d'insatisfaction, et une étape 104 consistant à calculer la consigne globale Cg pour laquelle le niveau moyen d'insatisfaction et l'énergie totale sont minimisés. Cette consigne est ensuite transmise (étape 90) à l'équipement global.

## Revendications

1. Procédé d'optimisation de l'énergie totale fournie à une pluralité d'équipements de confort répartis dans un espace (4, 6, 8, 10) comportant un module central de gestion de l'énergie à fournir (3) et une pluralité de zones Zi (12), chaque zone Zi comportant au moins un poste de travail (16, 18, 20, 22) susceptible d'accueillir au moins une personne comportant les étapes suivantes:
- déterminer le taux d'occupation des zones Zi (12),
- recueillir en temps réel des informations relatives à l'utilisation de chaque équipement de confort dans chaque zone Zi et des données représentatives du niveau d'insatisfaction des personnes présentes dans chaque zone Zi (12),
, et,
- évaluer à partir desdites données un taux d'insatisfaction global des personnes présentes dans chaque zone Zi,
- comparer le taux d'insatisfaction global à un seuil prédéfini,
procédé **caractérisé en ce qu'**il comporte en outre les étapes suivantes :
- Si le taux d'insatisfaction est inférieur au seuil prédéfini, calculer de façon itérative une consigne globale pour réduire l'énergie globale à fournir, et,
• réévaluer le taux d'insatisfaction résultant pour chaque nouvelle valeur de la consigne Cg,
• appliquer la consigne globale Cg calculée à l'un au moins des équipements de confort pour minimiser l'énergie totale fournie,
- Si le taux d'insatisfaction est supérieur au seuil prédéfini, varier de façon itérative la consigne globale jusqu'à ce que le taux d'insatisfaction global résultant devienne inférieur au seuil prédéfini,
• appliquer la consigne globale Cg au module central (3) de gestion de l'énergie totale pour adapter l'énergie totale à fournir.

2. Procédé selon la revendication 1 comportant en outre une étape consistant à adapter la consigne globale Cg en fonction des données représentatives du niveau d'insatisfaction des personnes présentes dans chaque zone Zi.

3. Procédé selon la revendication 1 comportant en outre une étape consistant à adapter l'énergie fournie à un équipement de confort de chaque zone Zi (12) en fonction des données représentatives du niveau d'insatisfaction des personnes présentes dans chaque zone Zi (12).

4. Procédé selon la revendication 1 comportant en outre une étape consistant à couper la fourniture d'énergie aux postes de travail situés dans les zones Zi (12) non occupées.

5. Procédé selon la revendication 2 dans lequel les données représentatives du niveau d'insatisfaction des personnes présentes dans chaque poste de travail (16, 18, 20, 22) comportent des grandeurs physiques représentant les conditions environnementales locales mesurées dans chaque poste de travail (16, 18, 20, 22) par les capteurs et des grandeurs subjectives relatives au métabolisme et à la vêture de chaque personne présente dans chaque poste de travail (16, 18, 20, 22).

6. Procédé selon la revendication 4 dans lequel lesdites grandeurs physiques comportent la température ambiante, la température radiative, l'humidité, et la luminosité, et lesdites grandeurs subjectives comportent des valeurs normalisées fournies par chaque personne présente dans chaque zone Zi (12) via une interface Homme-Machine et représentant la perception de chaque personne de la température ambiante, la température radiative, l'humidité, et la luminosité dans chaque zone Zi(12).

7. Dispositif d'optimisation de l'énergie totale à fournir à une pluralité d'équipements de confort répartis dans un espace (4, 6, 8, 10) comportant un module central de gestion de l'énergie globale (3) et une pluralité de zones Zi (12), chaque zone Zi comportant au moins un poste de travail (16, 18, 20, 22) susceptible d'accueillir au moins une personne, le dispositif comportant des moyens pour effectuer toutes les étapes du procédés selon l'une quelconque des revendications 1 à 6.

8. Programme d'ordinateur mémorisé sur un support et comportant des instructions pour mettre en œuvre, lorsqu'il est exécuté sur un ordinateur, les étapes du procédé selon la revendication 1.

## Patentansprüche

1. Verfahren zur Optimierung der Gesamtenergie, die einer Mehrzahl von Komforteinrichtungen bereitgestellt wird, die in einem Raum (4, 6, 8, 10) verteilt sind, der ein zentrales Modul (3) zur Verwaltung der bereitzustellenden Energie und eine Mehrzahl von Zonen Zi (12) enthält, wobei jede Zone Zi zumindest einen Arbeitsplatz (16, 18, 20, 22) enthält, der zumindest eine Person aufnehmen kann, umfassend die folgenden Schritte:
- Bestimmen der Belegungsrate der Zonen Zi (12),
- Erfassen in Echtzeit von Informationen über die Nutzung jeder Komforteinrichtung in jeder Zone Zi sowie von Daten, die für den Grad der Unzufriedenheit der in jeder Zone Zi (12) anwesenden Personen repräsentativ sind,
und
- Auswerten einer globalen Unzufriedenheitsrate der in jeder Zone Zi anwesenden Personen aus diesen Daten,
- Vergleichen der globalen Unzufriedenheitsrate mit einem vordefinierten Schwellenwert,
wobei das Verfahren **dadurch gekennzeichnet ist, dass** es ferner die folgenden Schritte umfasst:
- bei unter dem vordefinierten Schwellenwert liegender Unzufriedenheitsrate iteratives Berechnen einer globalen Sollvorgabe, um die bereitzustellende Gesamtenergie zu reduzieren, und
• erneutes Auswerten der resultierenden Unzufriedenheitsrate für jeden neuen Wert der Sollvorgabe Cg,
• Anwenden der berechneten globalen Sollvorgabe Cg auf zumindest eine der Komforteinrichtungen, um die bereitgestellte Gesamtenergie zu minimieren,
- bei über dem vordefinierten Schwellenwert liegender Unzufriedenheitsrate iteratives Ändern der globalen Sollvorgabe, bis die resultierende globale Unzufriedenheitsrate unter den vordefinierten Schwellenwert fällt,
• Anwenden der globalen Sollvorgabe Cg auf das zentrale Modul (3) zur Verwaltung der Gesamtenergie, um die bereitzustellende Gesamtenergie anzupassen.

2. Verfahren nach Anspruch 1, ferner umfassend einen Schritt des Anpassens der globalen Sollvorgabe Cg entsprechend den Daten, die den Grad der Unzufriedenheit der in jeder Zone Zi anwesenden Personen repräsentativ sind.

3. Verfahren nach Anspruch 1, ferner umfassend einen Schritt des Anpassens der Energie, die den Komforteinrichtungen in jeder Zone Zi (12) bereitgestellt wird, entsprechend den Daten, die für den Grad der Unzufriedenheit der in jeder Zone Zi (12) anwesenden Personen repräsentativ sind.

4. Verfahren nach Anspruch 1, ferner umfassend einen Schritt des Unterbrechens der Stromversorgung von Arbeitsplätzen, die in unbesetzten Zonen Zi (12) liegen.

5. Verfahren nach Anspruch 2, wobei die Daten, die für den Grad der Unzufriedenheit der an jedem Arbeitsplatz (16, 18, 20, 22) anwesenden Personen repräsentativ sind, physikalische Größen umfassen, die lokale Umweltbedingungen repräsentieren, die über Sensoren an jedem Arbeitsplatz (16, 18, 20, 22) gemessenen werden, sowie subjektive Größen, die sich jeweils auf den Stoffwechsel und die Kleidung der an jedem Arbeitsplatz (16, 18, 20, 22) anwesenden Person beziehen.

6. Verfahren nach Anspruch 4, wobei die physikalischen Größen die Umgebungstemperatur, die Strahlungstemperatur, die Luftfeuchtigkeit und die Helligkeit umfassen, und die subjektiven Größen normierte Werte umfassen, die von jeder Person, die jeweils in der Zone Zi (12) anwesend ist, über eine Mensch-Maschine-Schnittstelle geliefert werden und die Wahrnehmung jeder Person bezüglich Umgebungstemperatur, Strahlungstemperatur, Luftfeuchtigkeit und Helligkeit in jeder Zone Zi (12) darstellen.

7. Vorrichtung zur Optimierung der Gesamtenergie, die einer Mehrzahl von Komforteinrichtungen breitzustellen ist, die in einem Raum (4, 6, 8, 10) verteilt sind, enthaltend ein zentrales Modul (3) zur Verwaltung der Gesamtenergie und eine Mehrzahl von Zonen Zi (12), wobei jede Zone Zi zumindest einen Arbeitsplatz (16, 18, 20, 22) enthält, der zumindest eine Person aufnehmen kann, wobei die Vorrichtung Mittel zum Ausführen aller Schritte des Verfahrens nach einem der Ansprüche 1 bis 6 enthält.

8. Computerprogramm, das auf einem Datenträger gespeichert ist und Anweisungen zum Ausführen der Schritte des Verfahrens nach Anspruch 1 bei Ausführung auf einem Computer enthält.

## Claims

1. A method for optimising total energy supplied to a plurality of comfort equipments distributed in a space (4, 6, 8, 10) including a central module for managing energy to be supplied (3) and a plurality of zones Zi (12), each zone Zi including at least one work station (16, 18, 20, 22) likely to accommodate at least one person, including the following steps of:
- determining the occupancy rate of zones Zi (12),
- collecting in real time information relating to the use of each comfort equipment in each zone Zi and data representative of the dissatisfaction level of persons present in each zone Zi (12),
and,
- assessing from said data an overall dissatisfaction rate of the persons present in each zone Zi,
- comparing the overall dissatisfaction rate with a predefined threshold,
the method being **characterised in that** it further includes the following steps of:
- if the dissatisfaction rate is lower than the predefined threshold, iteratively calculating an overall setpoint to decrease the overall energy to be supplied, and,
• reassessing the resulting dissatisfaction rate for each new value of the setpoint Cg,
• applying the overall setpoint Cg calculated to at least one of the comfort equipments to minimise total energy supplied,
- if the dissatisfaction rate is greater than the predefined threshold, iteratively varying the overall setpoint until the resulting overall dissatisfaction rate becomes lower than the predefined threshold,
• applying the overall setpoint Cg to the central module (3) for managing total energy to adapt total energy to be supplied.

2. The method according to claim 1, further including a step of adapting the overall setpoint Cg as a function of data representative of the dissatisfaction level of the persons present in each zone Zi.

3. The method according to claim 1, further including a step of adapting the energy supplied to a comfort device of each zone Zi (12) as a function of data representative of the dissatisfaction level of the persons present in each zone Zi (12).

4. The method according to claim 1, further including a step of cutting the energy supply to the work stations located in non-occupied zones Zi (12).

5. The method according to claim 2, wherein the data representative of the dissatisfaction level of persons present in each work station (16, 18, 20, 22) include physical quantities representing local environment conditions measured in each work station (16, 18, 20, 22) by sensors and subjective quantities relative to the metabolism and clothing of each person present in each work station (16, 18, 20, 22).

6. The method according to claim 4, wherein said physical quantities include room temperature, radiative temperature, humidity, and luminosity, and said subjective quantities include standardised values supplied by each person present in each zone Zi (12) via a man-machine interface and representing each person's perception of room temperature, radiative temperature, humidity, and luminosity in each zone Zi (12).

7. A device for optimising the total energy to be supplied to a plurality of comfort equipments distributed in a space (4, 6, 8, 10) including a central module for managing overall energy (3) and a plurality of zones Zi (12), each zone Zi (12) including at least one work station (16, 18, 20, 22) likely to accommodate at least one person, the device including means to perform all the steps of the method according to any of claims 1 to 6.

8. A computer program stored on a medium and including instructions to implement, when run on a computer, the steps of the method according to claim 1.
